**Europäisches Patentamt**

**European Patent Office**

**Office européen des brevets**

(19)

(11) Numéro de publication: **0 040 555**

**A1**

(12) ## DEMANDE DE BREVET EUROPEEN

(21) Numéro de dépôt: **81400535.1**

(22) Date de dépôt: **02.04.81**

(51) Int. Cl.³: **C 01 B 3/02**

(30) Priorité: **18.04.80 FR 8008680**

(43) Date de publication de la demande:
**25.11.81 Bulletin 81/47**

(84) Etats contractants désignés:
**BE CH DE FR GB IT LI NL SE**

(71) Demandeur: **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cedex 07(FR)**

(72) Inventeur: **Grenier, Maurice**
**3, rue Camille Tahan**
**F-75018 Paris(FR)**

(72) Inventeur: **Halfon, Albert**
**5, rue Jacques Monod**
**F-94370 Noiseau(FR)**

(74) Mandataire: **Leclercq, Maurice et al,**
**L'AIR LIQUIDE SOCIETE ANONYME POUR L'ETUDE ET L'EXPLOITATION DES PROCEDES GEORGES CLAUDE**
**75, Quai d'Orsay**
**F-75321 Paris Cedex 7(FR)**

(54) **Procédé et installation de production de gaz de synthèse de l'ammoniac.**

(57) L'invention concerne la synthèse de l'ammoniac où un gaz brut d'hydrogène est soumis à un lavage à l'azote liquide.

Selon l'invention, une partie du courant d'azote (9) au moins partiellement refroidi est adjoint en (24) via la vanne (21) dans le courant de gaz lavé (11) en cours de réchauffement.

On profite ainsi de l'essentiel de l'effet cryogène dû à l'effet de mélange azote-gaz lavé sans pour autant provoquer la formation d'un courant diphasique très difficile ensuite à réintroduire de façon homogène dans l'échangeur.

EP 0 040 555 A1

./...

FIG.1

La présente invention concerne un procédé et une installation de production de gaz de synthèse de l'ammoniac, du genre mettant en oeuvre, en fin de traitement, un lavage à l'azote liquide d'un courant gazeux d'hydrogène non totalement épuré incorporant de l'azote et des impuretés telles que monoxyde de carbone, argon et méthane, dénommé par la suite hydrogène brut, avec refroidissement dudit courant d'hydrogène brut et d'un courant d'azote, dont au moins une partie sert à assurer ledit lavage et une partie restante est adjointe au courant de gaz lavé pour parfaire la composition du gaz de synthèse (75 % d'hydrogène, 25 % d'azote), le refroidissement de l'hydrogène brut et de l'azote s'effectuant essentiellement par échange thermique avec ledit courant de gaz lavé et avec un courant de gaz résiduaire résultant dudit lavage, et où le maintien en froid de l'installation est assuré au moins partiellement par un effet cryogène dû au mélange à basse température du courant d'azote et du courant de gaz issu du lavage, qui se produit lors de l'adjonction complémentaire d'azote.

Cette façon de faire, décrite dans le brevet français n° 1.338.965 de la Société déposante, consistant à parfaire le gaz de synthèse par adjonction d'azote à la température la plus froide de l'azote et du gaz lavé, l'azote étant sous une pression seulement légèrement supérieure à celle du gaz lavé, sans mettre en oeuvre de moyen de détente mécanique, mais simplement une ou plusieurs vannes assurant le mélange, est particulièrement simple et suffit généralement pour assurer un dégagement cryogénique suffisant pour compenser les pertes thermiques.

Toutefois, cette façon de faire présente l'inconvénient que l'introduction du courant d'azote refroidi à la température de lavage dans le courant de gaz issu du lavage lui-même à cette même température provoque généralement la formation d'un courant composite sous forme diphasique, ce qui entraîne d'importantes difficultés pour l'introduction de ce courant diphasique dans l'échangeur de chaleur destiné au refroidissement des courants d'azote et d'hydrogène brut. Généralement, cette difficulté est résolue en prévoyant des moyens complexes et délicats à mettre en oeuvre, consistant à séparer la fraction liquide de la fraction gazeuse de ce courant diphasique et à les recombiner individuellement dans les nombreux passages d'échange thermique.

La présente invention a pour but d'éviter cet inconvénient et donc de supprimer toutes les difficultés liées à l'existence d'un courant diphasique que l'on doit introduire à l'entrée d'un échangeur thermique.

L'invention résulte de l'observation que, s'il est bien exact que l'effet cryogène du mélange de l'azote et du gaz issu du lavage est d'autant plus marqué que la température à laquelle on effectue ce mélange est plus basse, il n'en reste pas moins vrai que, dans la majorité des cas, on peut tirer l'essentiel de l'avantage de cet effet cryogène de mélange sans descendre à des températures aussi basses que celle de l'ordre de - 190°C, qui est généralement la température du gaz issu du lavage. A partir de cette observation, l'invention propose que le courant partiel d'azote refroidi destiné à être adjoint au courant de gaz lavé soit adjoint audit courant de gaz lavé alors que ce dernier a été réchauffé à une température intermédiaire, qui est suffisamment basse pour que l'essentiel de l'effet cryogène lors du mélange soit obtenu, mais est cependant en tout cas suffisante pour que la température du mélange ainsi obtenu soit supérieure à la température de rosée dudit mélange.

L'expérience montre qu'il existe une plage restreinte de températures pour chaque pression de service, qui permet d'assurer cet effet.

L'invention concerne également une installation de production de gaz de synthèse de l'ammoniac mettant en oeuvre le procédé ci-dessus.

Les caractéristiques et avantages de l'invention ressorritont d'ailleurs de la description qui suit, à titre d'exemple, en référence aux dessins annexés dans lesquels :

- la figure 1 est une vue schématique d'une installation conforme à l'invention.

- les figures 2 et 3 sont des diagrammes d'échange thermique entre l'azote en cours de refroidissement et le gaz lavé en cours de réchauffement.

Dans la description qui suit, on spécifie entre parenthèses des valeurs numériques d'un exemple concret de mise en oeuvre.

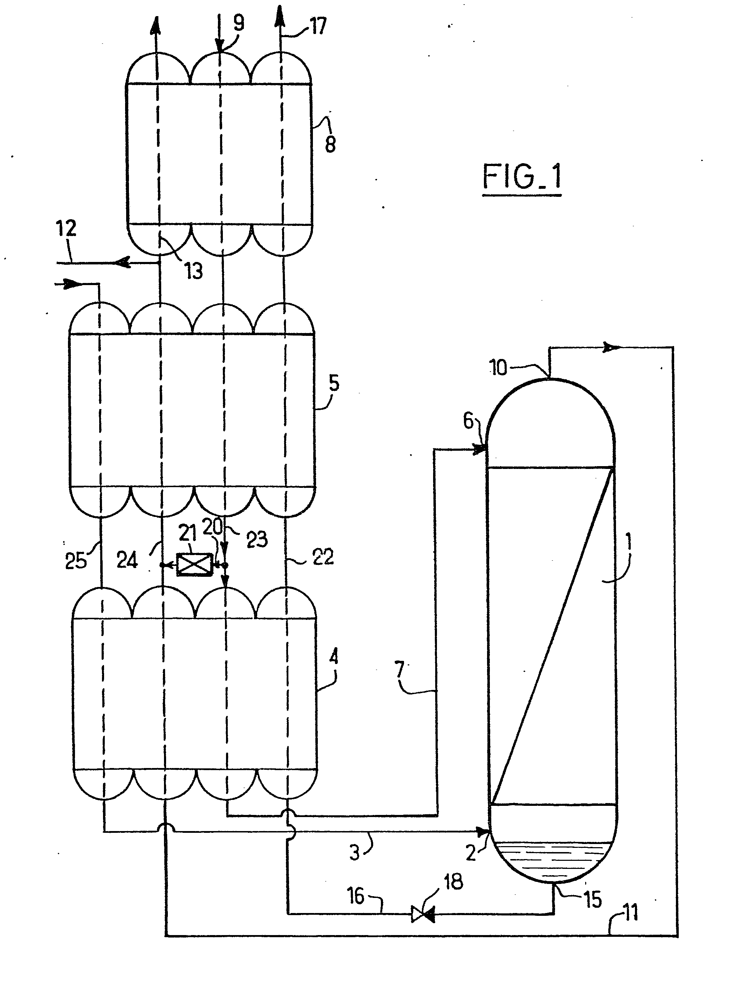

En se référant à la figure 1, on voit qu'une colonne de lavage à l'azote liquide 1 est alimentée en 2 avec de l'hydrogène brut (composition : H$_2$ : 93,57 %; N$_2$ : 0,32 %; CO : 4,80 %; A : 1,05 %; CH$_4$ : 0,26 %; pression:47 atm; débit : 80.159 Nm3/h; température : - 186°C) via une canalisation 3, cet hydrogène brut ayant subi un refroidissement, dans un échangeur 5 (température d'entrée : - 64°C et température de sortie : - 147°C) puis dans un échangeur 4 (température de sortie : - 186°C).

Cet hydrogène brut déjà partiellement refroidi ( - 64°C) provient d'une installation de lavage au méthanol non décrite.

L'azote de lavage (composition : N$_2$ : 100 %; débit: 9459 Nm3/h; température : - 186°C) est introduit en 6 en tête de la colonne de lavage et a été véhiculé par une conduite 7 et cet azote a une pression très peu supérieure à la pression de l'hydrogène brut dans la conduite 3 et a été refroidi non seulement dans les échangeurs 4 et 5, (température de sortie échangeur 5 : - 147°C) mais également dans un échangeur 8, au bout chaud duquel cet azote est introduit en 9 (débit : 25.902 Nm3/h; pression : 49 atm; température: 35°C).

Les produits issus du lavage sont d'une part le gaz lavé, soutiré en 10 en tête de la colonne de lavage 1 et qui forme un mélange d'hydrogène et d'azote (composition H$_2$ : 89,90 %; N$_2$:10,10%; température : - 190°C), la teneur en azote étant cependant insuffisante pour assurer la synthèse de l'ammoniac; ce courant est véhiculé par une conduite 11 vers l'échangeur 4 (température de sortie: - 147°C) et à cet endroit, on dérive du courant d'azote en cours de refroidissement un courant partiel 20 (débit : 16.443 Nm3/h; température : - 147°C) que l'on adjoint, au même niveau de température, par une vanne 21 au courant de gaz issu du lavage, de façon à obtenir un mélange de synthèse de composition correcte (composition : H$_2$ : 75 %; N$_2$ : 25%; température après mélange: - 169°C). Une partie (débit : 77.219 Nm3/h; température : - 67°C) de ce courant de gaz purifié issu de l'échangeur 5 est transférée via une conduite 12 vers l'installation de lavage au méthanol, où elle assure le refroidissement de l'hydrogène brut non traité, tandis qu'une autre partie 13 est réchauffée (température : 32°C) dans l'échangeur 8, le courant partiel 12 et le courant partiel 13 issu de l'échangeur 8 étant bien entendu réunis ensuite avant d'être envoyés vers le réacteur de synthèse d'ammoniac.

En cuve 15 de la colonne de lavage 1 est soutiré un résiduaire contenant de l'azote et les impuretés monoxydes de carbone, argon et méthane (composition : $H_2$ : 8,74% : $N_2$ : 20,24 % ; CO : 56,46%; A : 12,09 %; $CH_4$ : 2,47 %; débit : 6846 Nm3/h) et ce résiduaire est transféré par une conduite 16, après détente dans une vanne 18 (température : - 191,5°C), au travers des échangeurs 4, 5 et 8 d'où il sort par une conduite 17 (température : 32°C).

On constate que cette injection d'azote s'effectue à un niveau de température ( - 147°C) qui est nettement moins bas que celui ( - 186°C) auquel est effectué le lavage de l'azote liquide, puisque, d'une part le courant d'azote n'a pas subi le refroidissement final dans l'échangeur 4 (température de l'azote : - 147°C) et que, au contraire, le gaz issu du lavage a vu sa température réchauffée dans ce même échangeur 4 à cette même température.

Le dégagement cryogénique dû à l'effet de mélange est cependant suffisant, compte-tenu de la température à laquelle il est effectué et de la pression des deux courants gazeux, pour assurer, par la réduction de la pression partielle de l'azote, initialement pur, un écart de température adéquat entre le fluide en 23 d'une part et les fluides en 22, 24 et 25 dans l'échangeur 5, d'autre part (température du mélange : - 169°C).

L'avantage essentiel de ce que l'on vient de décrire est que l'azote, ainsi dérivé et réinjecté dans le courant de gaz issu du lavage, ne se trouve pas, même partiellement, condensé dans ce gaz récepteur en 24, en sorte que le courant de mélange gazeux de synthèse ainsi réalisé continue à rester à l'état purement gazeux et que sa réintroduction dans l'échangeur 5 ne présente de ce fait aucune difficulté particulière. Ainsi l'échangeur 5, de même d'ailleurs que les autres échangeurs 4 et 8, ont des moyens d'admission qui sont de construction simple, puisque adaptés à l'admission de fluides tous monophasiques.

La détermination du niveau de température auquel l'adjonction d'azote doit être faite est donc essentiellement dictée par le fait que la température du mélange de synthèse obtenu se situe au-dessus du point de rosée. Cette température de rosée varie avec la pression : elle est de l'ordre de - 177°C à 40 atm et s'élève quelque peu avec la pression, par exemple - 176,16°C à 50 atm, - 175,3°C atm à 70 bars, et baisse quelque peu ensuite : - 175,5°C à 80 bars; - 176,7°C à 100 atm.

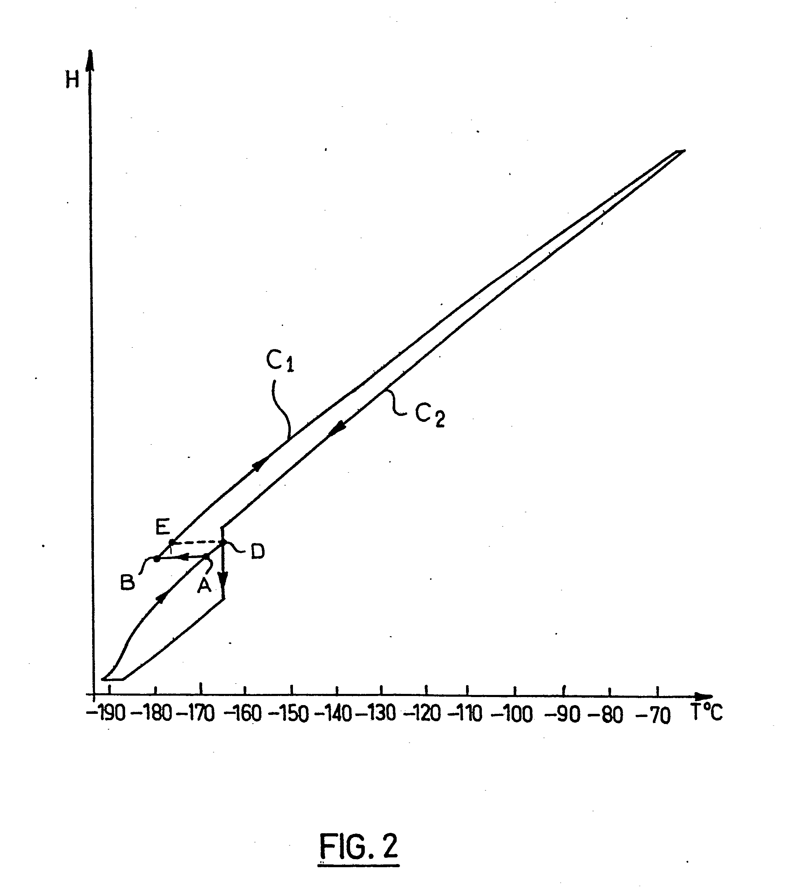

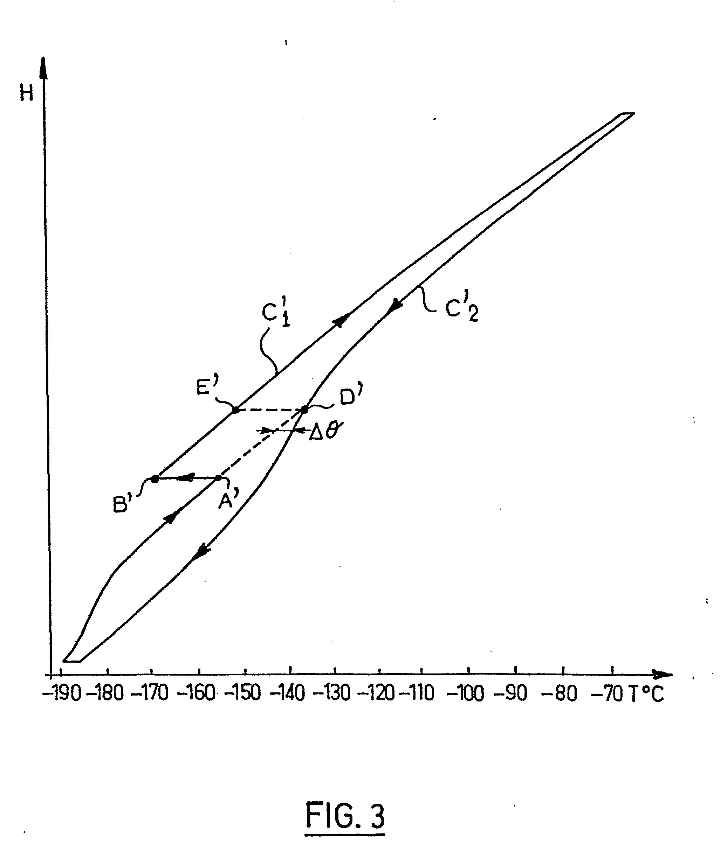

Bien que l'on ait intérêt à se situer peu au-dessus de cette température de rosée, il existe une certaine plage, au-dessus de cette température de rosée où l'effet cryogène peut être utilisé et cette plage, dont la limite supérieure de température dépend de divers facteurs, dont la pression, la composition du gaz traité, peut cependant être déterminée par le diagramme d'échange enthalpie H - température T, dont deux exemples sont donnés à la figure 2, (pression 15 bars inférieure à la pression critique de l'azote) et à la figure 3 (pression 48 bars supérieure à la pression critique de l'azote). On voit que l'effet cryogène de mélange conduit à une réduction de température AB, A'B' de la courbe $C_1$, $C_1'$ de réchauffement du gaz lavé et il est bien clair que cet effet cryogène ne peut être obtenu pour des températures supérieures à celles du point D (figure 2) et D' (figure 3) où l'écart DE, D'E', entre la courbe de refroidissement de l'azote $C_2$ ($C'_2$) et la courbe de réchauffement $C_1$ ($C_1'$) est égal à l'effet cryogène obtenu AB (A'B').

REVENDICATIONS

1. Procédé de production de gaz de synthèse de l'ammoniac, du genre mettant en oeuvre un lavage à l'azote liquide d'un courant gazeux d'hydrogène brut incorporant de l'azote et des impuretés telles que monoxyde de carbone, argon et méthane, avec refroidissement dudit courant d'hydrogène brut et d'un courant d'azote à une pression peu supérieure à celle du courant d'hydrogène, dont au moins une partie est introduite en tête d'une colonne de lavage et une autre partie également refroidie est adjointe au courant de gaz lavé, le refroidissement des deux courants d'hydrogène brut et d'azote s'effectuant par échange thermique avec le courant de gaz lavé soutiré en tête de la colonne de lavage et avec un courant résiduaire essentiellement constitué d'azote et des dites impuretés soutirées en cuve de ladite colonne de lavage, caractérisé en ce que le courant partiel d'azote refroidi destiné à être adjoint au courant de gaz lavé est adjoint audit courant de gaz lavé alors que ce dernier a été réchauffé à une température intermédiaire, qui est suffisamment basse pour que l'essentiel de l'effet cryogène lors du mélange soit obtenu, mais est cependant en tout cas suffisante pour que la température du mélange ainsi obtenu soit supérieure à la température de rosée dudit mélange.

2. Procédé de production de gaz de synthèse de l'ammoniac, selon la revendication 1, caractérisé en ce que le courant partiel d'azote adjoint au courant d'hydrogène lavé est refroidi à une température moins basse que celle à laquelle s'effectue le lavage.

3. Procédé de production de gaz de synthèse selon la revendication 1 ou 2, caractérisé en ce que l'azote adjoint au gaz lavé est refroidi partiellement à une température qui est celle de réchauffement partiel du gaz lavé.

4. Installation de production de gaz de synthèse d'ammoniac, pour la mise en oeuvre du procédé selon l'une quelconque des revendications 1 à 3, du genre comprenant une colonne de lavage avec une admission de gaz brut, avec en tête admission d'azote de lavage et soutirage de gaz lavé, en cuve soutirage d'un résiduaire liquide, une ligne d'échange thermique entre les produits admis et les produits soutirés, caractérisée en ce que cette ligne d'échange

7    0040555

comporte deux échangeurs distincts (4) et (5), dont les moyens
d'admission sont du type pour fluide monophasique, et par une
conduite de raccordement (20) à vanne de réglage (21) entre les
passages pour l'azote (23) et les passages pour le gaz lavé (24).

FIG_1

0040555

FIG. 2

0040555

FIG. 3

# RAPPORT DE RECHERCHE EUROPEENNE

Office européen
des brevets

EP 81 40 0535

| | DOCUMENTS CONSIDERES COMME PERTINENTS | | CLASSEMENT DE LA DEMANDE (Int. Cl.³) |
|---|---|---|---|
| Catégorie | Citation du document avec indication, en cas de besoin, des parties pertinentes | Revendica-tion concernée | |
| D | FR - A - 1 338 965 (L'AIR LIQUIDE)<br><br>* pages 4,5, résumé 2°; page 2, colonne de gauche, lignes 16-58, colonne de droite, lignes 1-6 *<br><br>--- | 1 | C 01 B 3/02 |
| A | FR - A - 1 091 200 (VETROCOKE) | | |
| A | FR - A - 1 091 199 (VETROCOKE) | | |
| A | FR - A - 1 579 207 (LINDE) | | |
| A | FR - A - 1 432 529 (GESELLSCHAFT FÜR LINDE'S EISMASCHINEN) | | |
| A | FR - A - 1 274 934 (TEXACO)<br><br>------- | | |

**DOMAINES TECHNIQUES RECHERCHES (Int. Cl.³)**

C 01 B 3/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| | | |
|---|---|---|
| ✗ | Le présent rapport de recherche a été établi pour toutes les revendications | |
| Lieu de la recherche | Date d'achèvement de la recherche | Examinateur |
| La Haye | 06-08-1981 | STEELANDT |

OEB Form 1503.1  06.78